# EUROPEAN PATENT SPECIFICATION

(11) **EP 3 003 802 B1**
(45) Date of publication and mention of the grant of the patent: **09.10.2019**
(21) Application number: 14728178.6
(22) Date of filing: 03.06.2014
(51) Int. Cl.: B60T 7/20, B60T 8/17, B60T 8/18, B60T 8/24, B60T 8/32, B60T 11/10, B60T 11/21, B60T 15/46, B60T 17/22

(54) **APPARATUSES AND METHODS FOR BRAKING A TRACTOR-TRAILER COMBINATION**
VORRICHTUNGEN UND VERFAHREN ZUM ABBREMSEN EINER TRAKTOR-ANHÄNGER-KOMBINATION
APPAREILS ET PROCÉDÉS DE FREINAGE D'UNE COMBINAISON TRACTEUR SEMI-REMORQUE

(30) Priority: 04.06.2013 IT MO20130162
(43) Date of publication of application: 13.04.2016
(73) Proprietor: CNH Industrial Italia S.p.A., 10135 Torino (IT)
(72) Inventor: MORSELLI, Riccardo, I-41057 San Vito Di Spilamberto Modena (IT)
(74) Representative: CNH Industrial IP Department
(86) International application number: PCT/EP2014/061496
(87) International publication number: WO 2014/195319

(56) References cited:
- EP-A1- 2 570 314
- EP-A1- 2 570 317
- WO-A1-2008/092683
- WO-A1-2012/095615
- WO-A1-2013/004315
- DE-A1- 10 157 976
- FR-A1- 2 891 604
- GB-A- 2 469 853
- JP-A- 2004 291 751
- US-B1- 6 804 599

## Description

The invention relates generally to apparatuses and methods for braking a coupled tractor-trailer combination.

It is well known for agricultural and other tractors to tow trailing vehicles. Numerous examples exist in many branches of transportation technology. The invention is particularly applicable in the case of an agricultural tractor towing an un-powered trailer such as a grain or beet trailer, hay wagon, mower, forage harvester, baler or similar vehicle that requires the traction of the tractor to effect movement.

The invention is also applicable in other situations in which a trailer is towed. Examples include but are not limited to articulated goods vehicles; combinations of military tractors/cabs and towed vehicles; and two-vehicle forestry and snowmobile trains.

A further area in which the invention is useful is that of tractors the frames of which are articulated to provide a steering effect about a mid-point, with driven wheels or other ground-engaging members (such as powered tracks) attached to both front and rear articulating parts. Such vehicles are sometimes referred to as "bi-directional" tractors or articulated tractors. Relatively small, wheeled examples of such tractors are employed e.g. in grass cultivation work and forestry; and very large scale machines, sometimes including tracks as the ground-engaging members, are used on large farms.

When the tractor is fitted with four ground-engaging wheels (or other members such as tracks) the invention is useable regardless of whether all four, or just two, of the wheels (or tracks, if present) are driven by the tractor engine.

The foregoing vehicle combinations and types are referred to generally herein as "tractor-trailer combinations".

The phenomenon of jack-knifing can arise in use of a tractor-trailer combination. In this situation forces exerted forwardly by the trailer via the trailer hitch (i.e. the coupling to the tractor), or in the case of a 4WD bi-directional tractor by the rear half of the articulated chassis via the steering articulation, can cause dangerous oversteer in the combination.

In an extreme case the forwardly exerted trailer force can exceed the grip of the ground-engaging members of the tractor, with the result that the tractor slews, possibly violently, in a skid situation. Even if no skidding occurs however the driver/operator of a tractor-trailer combination that undergoes jack-knifing or the precursor to jack-knifing may find that the combination becomes impossible to control.

The jack-knife situation therefore is usually extremely dangerous. Aside from the fact that the mass of the tractor-trailer combination (which may be several tens of tonnes in the case of a loaded agricultural trailer) moves uncontrolledly, perhaps at speeds of more than 30 km/h, there is also a danger of a rollover accident if any component of force generated by the trailer acts even for a short time in a direction tending to unlevel the tractor.

Tractor and trailer rollover accidents are often very serious. Even if a complete rollover does not occur during a jack-knife situation the contact area of the tyres of the driven wheels of the tractor may reduce, thereby adversely affecting the characteristics of the combination and for a further reason making it to harder to correct the jack-knife safely.

Jack-knifing is more likely during turning manoeuvres. This is partly because at such a time the line of application of any force exerted by the trailer through the trailer joint is not aligned with the longitudinal axis of the tractor, so a significant component of the forwardly acting force in effect exaggerates the turning moment acting on the tractor during the turn.

Also a tractor operator may have to concentrate on several variable factors while conducting a turn, and this may make him/her less alert to the possibility of a jack-knife occurring.

It is known to provide heavy trailers with brakes. Typically these are hydraulic, pneumatic or electric wheel braking systems the operation of which is linked to operation of the tractor brakes.

Although known trailer brakes assist the overall braking effort in a tractor-trailer combination they do not eliminate jack-knifing.

Publications nos. WO2013/004314 and WO2013/4315 describe situations in which inadequate trailer braking performance, relative to the mass of the trailer and its contents, and engine braking effects that arise when a tractor operator releases a throttle pedal or engine governor control, can cause jack-knifing.

US6,804,599 B1 discloses an electrical system for detecting and correcting loss of control of a vehicle pulling a fifth wheel trailer including a first wheel movement sensor disposed adjacent to a driven wheel of the vehicle, and a second wheel movement sensor operably disposed adjacent a non-drive wheel of the vehicle.

WO2013/004314 and WO2013/4315 respectively describe highly effective closed loop and open loop control regimes for eliminating or at least significantly reducing the likelihood of jack-knifing arising from such causes.

One effect however of the arrangements and methods described in WO2013/004314 and WO2013/4315 is that the operator of a tractor forming part of a tractor-trailer combination may after a period of use come to rely on their effectiveness. Thus he or she may choose to demand aggressive decelerations of the combination in the belief that the software and hardware would intervene in order to override any operator settings that would give rise to potentially dangerous situations.

Even if this was not the case it is desirable to render automated systems as safe as possible.

According to the invention in a first aspect there is provided apparatus for braking a coupled tractor-trailer combination in which the tractor includes a drive train one or more operational parameters of which is adjustable and having an engine and at least one ground-engaging member driveably connected thereto via an adjustable ratio transmission; and the trailer includes at least one ground engaging member having at least one trailer brake, the apparatus including a control circuit for the trailer brake having a control device, said control circuit being a pneumatic or a hydraulic control circuit, and one or more fault detectors, the apparatus also including a controller that adjusts one or more parameters of the drive train in response to detection of one or more faults by one or more said fault detectors.

It can be appreciated by the skilled person that the term "fault detector" is a broad term that includes a fault detector sensor among other arrangements.

The fault detector is able to detect a defect in a circuit or wiring caused by e.g. broken wires, imperfect connections, poor insulation, grounding, or shorting.

Adjustment of a parameter as specified above may take a range of forms within the scope of the invention but in preferred embodiments of the invention the nature of the adjustment is to ensure that the deceleration of the tractor-trailer combination is less than a predetermined threshold value. This in turn means that the forces transmitted forwardly from the trailer via the tractor-trailer joint remain at a lesser value than would equate to instability, loss of grip and/or jack-knifing, even in the event of a fault developing in the hardware or software that controls the braking system.

The control circuit is a pneumatic or hydraulic control circuit and the control device is a control valve.

However in alternative forms of the apparatus of the invention the braking system may be for instance an electric braking system or a hybrid of e.g. electrically and hydraulically powered braking systems (or of hydraulic and pneumatic, or of electric and pneumatic systems), in which case the control device would adopt a non-valve form that is appropriate to the design of the braking arrangement.

Further, preferably the tractor has at least one tractor brake; the tractor brake is a hybrid pneumatic-hydraulic brake; the trailer brake is a pneumatic brake; and the control device is a control valve.

When the control circuit is a pneumatic or hydraulic or a hybrid pneumatic-hydraulic one however preferably the controller is operatively connected to the control valve.

The controller in embodiments of the invention preferably is configured as an electronic control unit (ECU) that is programmable e.g. at the level of factory-set firmware in order to provide the advantageous effects of the invention.

In more detail the controller preferably is operatively connected to transmit one or more transmission ratio shift commands to the transmission of the tractor, and the parameter of the drive train that is adjusted therefore is the transmission ratio.

Preferably, the controller induces a delay in adjustment of the transmission ratio and preferably the forward movement of the tractor-trailer combination is in dependence on the transmission ratio.

For an engine with powershift transmission system this delay prevents the engine from revving excessively, which in turn leads to a less aggressive, and hence safer, deceleration. For an engine with a continuously-variable transmission (CVT), the transmission shift this delay can lead to a smoother engine braking effect.

Additionally or alternatively the engine includes a throttle or a governor; the controller is operatively connected to transmit one or more throttle or governor control commands to the throttle or governor; and the parameter of the drive train that is adjusted therefore is the throttle or governor setting.

In practical embodiments of the invention the apparatus is configured so that the parameter adjustment includes both a transmission ratio adjustment and a throttle/governor setting adjustment.

Overall therefore the controller preferably adjusts the transmission ratio and/or the throttle or governor so as to maintain the deceleration of the tractor-trailer combination below a chosen threshold value on detection of a fault by one or more said fault detectors.

The one or more fault detectors includes a control circuit pressure detector that generates a signal indicative of detection of a fault when the hydraulic or pneumatic brake fluid pressure deviates from a commanded pressure value by more than a predetermined error threshold. Thus the apparatus of the invention is configured so that a failure of the brake fluid pressure to respond in line with a commanded or requested braking performance is determined to be a fault.

Embodiments of the invention may as described herein furthermore identify one or more additional conditions as faults that would cause intervention to modify the deceleration of the combination; but a failure of the brake fluid pressure to respond as demanded is regarded as one of the most serious kinds of system fault that in the absence of corrective action could lead to accidents.

In line with the foregoing the one or more fault detectors may therefore additionally include, for example, detectors of one or more engine and/or transmission faults, one or more detectors of the application of one or more automatically applicable brakes of the tractor and/or the trailer,one or more detectors of failure of the drive train and one or more detectors of broken wires.

The apparatus of the invention preferably also includes one or more alert devices operatively connected to the controller so as to generate an audible and/or visible alert to an operator of the tractor on the detection of a fault by one or more said fault detectors. Such alert devices may take a range of forms such as but not limited to illuminable warning lamps that become visible in the cab of the tractor, one or more messages that are displayed via a display such as liquid crystal display screen in the cab, or one or more audible warnings produced in a loudspeaker in the cab. The audible warnings may include sounds such as chimes, and/or comprehensible spoken messages that may be pre-recorded or may be synthesised in real time using speech synthesis software.

According to a second aspect of the invention there is provided a method of braking a coupled tractor-trailer combination in which the tractor includes a drive train one or more operational parameters of which is adjustable and having an engine and at least one ground-engaging member driveably connected thereto via an adjustable ratio transmission; and the trailer includes at least one ground engaging member having at least one trailer brake, the apparatus including a control circuit for the trailer brake having a control device, said control circuit being a pneumatic or hydraulic control circuit, and one or more fault detectors, the apparatus also including a controller and the method including the step of using the controller to adjust a parameter of the drive train in response to detection of a fault by one or more said fault detectors.

Such a method advantageously prevents or at least ameliorates the problems set out herein.

Preferably the step of using the controller to adjust a parameter of the drive train in response to detection of a fault by one or more said fault detectors includes adjusting the ratio of the transmission and/or a setting of the throttle or governor so as to maintain the deceleration of the tractor-trailer combination below a chosen threshold value.

Also preferable is the step whereby the controller introduces a delay in the adjustment of the ratio of transmission.

The advantages of the delay in this adjustment are set out above in connection with analogous features of the apparatus of the invention.

Adjusting the transmission ratio and/or the throttle or governor setting controlledly reduces the suddenness of deceleration of the combination without using the trailer brakes, thereby rendering the preferred control intervention effective even when a trailer braking system fault exists.

The one or more fault detectors includes a control circuit pressure detector and the method preferably includes generating in the control circuit pressure detector a signal indicative of detection of a fault when the hydraulic or pneumatic brake fluid pressure deviates from a commanded pressure value by more than a predetermined error threshold. The advantages of this aspect of the method are set out above in connection with analogous features of the apparatus of the invention.

Additionally or alternatively the one or more fault detectors may include detectors of one or more engine and/or transmission faults, one or more detectors of the application of one or more automatically applicable brakes of the tractor and/or the trailer, one or more detectors of failure of the drive train and one or more detectros of broken wires, and detection of a fault by one or more said fault detectors includes the generation of a fault signal by any one or more of the engine and/or transmission fault detectors, the or a said detector of the application of one or more automatically applicable brakes of the tractor and/or the trailer, one or more said detectors of failure of the drive train, and one or more said detectors of broken wires.

Thus the method of the invention advantageously takes account of further factors that may give rise to pronounced deceleration of the combination, and allows for the taking of remedial action.

As an example if the detector of a transmission fault is activated this suggests that the transmission may be stuck in a relatively low ratio, that is associated with significant engine braking effects that could give rise to jack-knifing or instability. In such a case the method of the invention may operate to reduce the throttle or governor setting to compensate for the inability to shift to a higher transmission ratio, and thereby reduce the extent of the deceleration to controlled levels.

Activation of the other detectors indicated may give rise to similar control actions, or different ones (such as the shifting of the transmission ratio in cases of the transmission remaining operative and another part of the drive train becoming faulty).

Preferably the tractor-trailer combination includes one or more alert devices operatively connected to the controller and the method includes the step of generating an alert that is audible by and/or visible to an operator of the tractor on the detection of a fault by one or more said fault ddetectors. The alerts may be as described above.

The invention is also considered to reside in a tractor-trailer combination including apparatus according to any of Claims 1 to 9 hereof, and/or a tractor-trailer combination including one or more programmable devices programmed to perform the steps of a method according to any of Claims 10 to 14 hereof.

As can be seen from the foregoing, the apparatus and methods of the invention may be viewed in one sense as relating to the diagnostics of braking of a tractor-trailer combination.

There now follows a description of preferred embodiments of the invention, by way of non-limiting example with reference being made to the accompanying drawings in which:
Figure 1 is a schematic representation of a typical tractor-trailer combination, illustrating how jack-knifing and other forms of instability can arise; and
Figure 2 is a schematic representation of apparatus forming parts of a combination such as that shown in Figure 1 and in accordance with the apparatus of the invention. The apparatus of Figure 2 is suitable for putting the methods of the invention into effect.

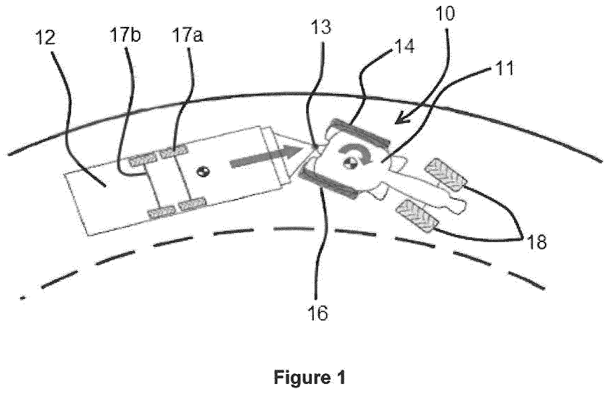

Referring to the drawings, Figure 1 illustrates the forces that may cause jack-knifing or similar instabilities in a tractor-trailer combination 10.

In Figure 1 a tractor 11 tows behind it a trailer 12 that is coupled to it by way of an articulated tractor-trailer joint or connection 13. In Figure 1 the tractor-trailer combination is shown turning on a roadway, but the invention is equally applicable when the combination is operating off-road and/or when travelling in a straight line. The invention furthermore is of benefit regardless of the surface on which the combination is travelling. Examples of such surfaces include but are not limited to dry and wet Tarmacadam roads, concrete, roadstone, ice, snow, grass, soil, mud, woodchip, granulated rubber and gravel.

In the example illustrated the tractor 11 is a two-wheel drive, wheeled agricultural tractor. As explained herein however the tractor 11 may take a range of other forms within the scope of the invention.

Similarly for purposes of illustrating the invention the trailer 12 is shown in Figure 1 as a twin-axle trailer having at least one, and in the embodiment illustrated two, braked axles 17a, 17b in which the left and right ground-engaging wheels are capable of being braked; but other designs of towed vehicle may, within the scope of the invention, be substituted for the trailer 12 shown.

The connection 13 is a conventional trailer towing joint. This means that the coupling between the tractor 11 and trailer 12 is articulated to permit the combination 10 to turn as illustrated in Figure 1; and that the coupling is relatively rigid in the fore- and aft-directions such that longitudinally acting forces between the trailer 12 and tractor 11 are transmitted without any appreciable attenuation.

In any situation therefore in which the tractor 11 decelerates more rapidly than the trailer 12 the mass MTRAILER of the trailer acts forwardly via the joint 13 and pushes the tractor 11 from behind with a force FINERTIAL_TRAILER. As shown by the large arrow in Figure 1 when such a force acts in a direction that is not aligned with the longitudinal axis of the tractor 11 the latter receives an offset force, at the rear, tending to slew the rear of the tractor off-centre.

If as illustrated in Figure 1 the steering wheels 18 of the tractor are turned, such forces exaggerate the steering of the tractor 11 such that oversteer occurs. The turning moment acting on the tractor as a result of these effects is represented schematically by the arcuate arrow in Figure 1.

As explained above, under some circumstances the force FINERTIAL_TRAILER is sufficient to overcome the grip of the rear, driven wheels 14, 16 of the tractor 11.

This can be a particularly acute problem in the event of one or more of the faults described herein arising.

If the fault includes a failure of apparatus such as that described in WO2013/004314 or WO2013/004315 as fitted to the combination this may as outlined above result in the operator of the tractor believing that the control system would intervene in order to prevent dangerous engine braking situations when in fact this would not be possible. This could lead to potential instability of the tractor-trailer combination before the operator realises that a fault exists.

It therefore is strongly desirable for the braking apparatus of the tractor-trailer combination to preserve stability of the combination even in the event of one or more faults arising in the braking system itself.

Also as explained herein various other faults, including drive train faults, can cause rapid deceleration of the combination that could be dangerous. The invention seeks to preserve control of the combination in such situations as well.

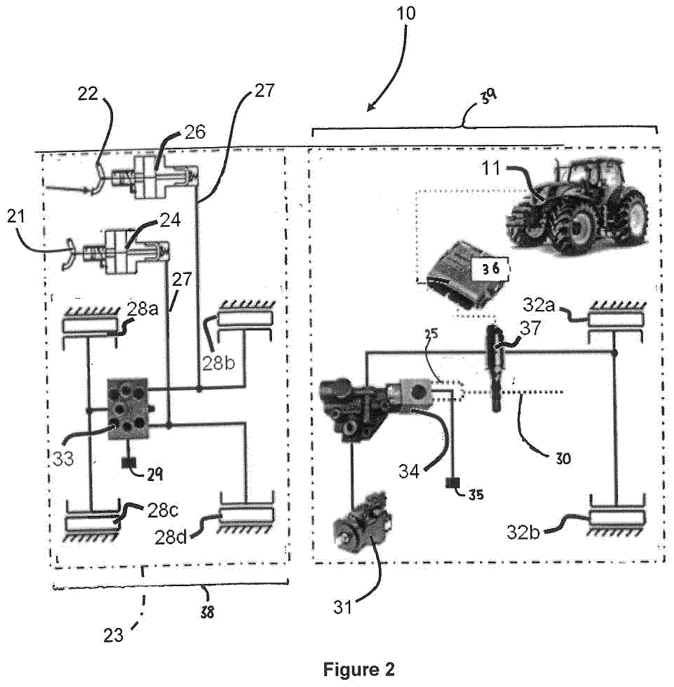

Figure 2 shows in schematic form certain key operative parts of one form of a tractor-trailer combination 10 according to the invention. Figure 2 for clarity omits certain interconnecting components the nature of which will be familiar to those of skill in the agricultural vehicle art.

For the avoidance of doubt, the references of Figure 2 and what the references signify are presented in the table below.

### Reference numeral

- 10: Tractor-trailer combination
- 11: Tractor
- 21: Left-hand brake pedal
- 22: Right-hand brake pedal
- 23: Tractor brake circuit
- 24: Left-hand brake booster
- 25: Piloting pressure line
- 26: Right-hand brake booster
- 27: Hydraulic line
- 28a: Right-hand front brake
- 28b: Right-hand rear brake
- 28c: Left-hand front brake
- 28d: Left-hand rear brake
- 29: Port plugged to trailer brakes valve supply
- 30: Low pressure line
- 31: Pump
- 32a: Right-hand trailer brake
- 32b: Left-hand trailer brake
- 33: Manifold
- 34: Trailer brake valve
- 35: Port plugged to tractor brakes supply
- 36: Electronic control unit (ECU) or similar device
- 37: Shift valve
- 38: Tractor braking section
- 39: Trailer braking section

In Figure 2 hydraulic pressure in a tractor brake circuit 23 is generated by the left and right brake pedals 21, 22 and associated brake boosters 24, 26 in hydraulic lines 27.

The right-hand pedal 22 is driveably connected to the right-hand brake booster 26 by the hydraulic line 27. The left-hand pedal 21 is driveably connected to the left-hand brake booster 21 by the hydraulic line 27.

The hydraulic pressure activates the tractor brakes 28a, 28b, 28c, 28d. On activation of the brakes 28 the hydraulic pressure is piloted to a trailer brake valve 34 that is hydraulically connected to the tractor brake circuit on hitching of the trailer 12 of Figure 1 at the joint 13. The generation of trailer brake valve pressure causes hydraulic fluid pressurised by trailer brake pump 31 to operate the trailer brakes 32a, 32b.

The hydraulic pressure in the lines 27 may be sensed as described herein and used to develop electrical signals that are control parameters of the trailer braking effort. A plugged manifold 33 may generate a pressure signal that is input to a programmable electronic control unit (ECU) or similar device 36 that preferably is located in the trailer brake valve 34 or (in other embodiments of the invention) on board the tractor 11.

The ECU 36 includes one or more programmable parts such as a microprocessor that is programmable to monitor the sensed hydraulic pressure, and compare it to a pressure value that is expected based on e.g. the brake pedal pressure or a similar measurable quantity indicative of expected brake circuit performance.

In the event of the sensed pressure deviating from the expected pressure by more than a predetermined error margin the ECU 36 determines that a braking system fault exists. At such a time the ECU 36, or another control device forming part of the tractor-trailer combination, may generate a command that alters a parameter of the drive train of the combination so as to prevent sudden, sharp or aggressive deceleration, deriving from causes other than activation of the brakes themselves, from arising.

Thus the control commands would have the aim of limiting the effective amount of throttle lift-off and/or limiting the extent to which transmission downshifting may occur, with the result that slowing of the combination remains relatively gentle regardless of any engine braking or transmission shift braking demanded by the tractor operator. This is desirable since in the absence of effective trailer brakes it would not be possible for the control software to counteract such conditions by applying brakes. This would be true even if the fault was such that the tractor brakes remained effective, since in such a case the tractor brakes would not be activated and so jack-knifing could occur as described herein.

The ECU 36 may also receive as inputs signals from the following detectors that may also be present:
- the engine ECU of the tractor 11, that can generate electronic signals indicative of the engine speed, throttle setting and torque output of the engine;
- depending on the design of the tractor, the shift valve 37 of a discrete-ratio transmission or equivalent component of a continuously variable transmission (CVT) of the tractor 11 from which it is possible to generate a signal indicative of the prevailing transmission ratio;
- one or more wheel speed detectors from which it is possible to calculate both the rotational speed of a ground-engaging member in the form of a wheel of the tractor 11 and also the acceleration/deceleration of the ground-engaging member in question and generate signals indicative of such data;
- one or more detectors that are capable of generating signals indicative of the rate of fuelling of the engine;
- one or more lateral acceleration detectors, using which it is possible to generate signals indicative of the lateral force applying to a wheel or other ground-engaging member of the tractor;
- one or more tractor accelerometers that generate signals indicative of the acceleration or deceleration of the tractor-trailer combination;
- one or more tractor forward speed detectors that generate signals indicative of forward speed as defined herein;
- one or more detectors of the steering angle of the steerable wheels (or other ground-engaging members) of the tractor;
- detectors indicative of application of the tractor brake(s) and the trailer brake(s) respectively; and
- a tractor inclinometer that generates signals indicative of the slope, especially as judged with reference to the fore-aft dimension, on which the tractor-trailer combination operates.

Such detector inputs, either alone or in combination with one another, may be used as indicators of further faults such as drive train faults that as explained may give rise to sudden, rapid deceleration of the combination.

As noted the programming of the ECU and the arrangement of the parts of the combination may be such as to permit control actions in the event of such fault detection that also reduces and controls the rate of deceleration of the combination. Clearly however the nature of the control action may differ depending on the character of the detected fault(s).

Thus if the fault is for example a drive train fault that prevents the shifting of the transmission the control action would need to involve control of the throttle/governor setting in order to provide for slow deceleration of the combination. Equally a fuelling or throttle fault would mean that this mode of controlling the motion of the combination would not be available. In such a case the control action typically would involve a transmission shift and/or the controlled application of the brakes in order to slow the combination safely.

In addition to the foregoing it is desirable to signal to the operator of the tractor-trailer combination that one or more fault conditions exists, especially since such conditions may result in altered dynamic behaviour of the vehicular train. Thus the apparatus of Figure 2 may in addition be connected to provide to the tractor operator one or more visible and/or audible warnings of changes in the likely dynamic performance of the combination. Such warnings may take the form of illumination of illuminable warning lamps that become visible in the cab of the tractor, one or more messages that are displayed via a display such as liquid crystal display screen in the cab, or one or more audible warnings produced in a loudspeaker in the cab. The audible warnings may include sounds such as chimes, and/or comprehensible spoken messages that may be pre-recorded or may be synthesised in real time using speech synthesis software.

It is even possible that the warnings could be tactile in nature. Thus a transmission shift lever equipped with one or more emf-generating coils could become the subject of increased resistance in the event of fault detection, signifying to the tractor operator that decreasing of the transmission ratio in a dramatic fashion is not possible. Combinations of the warning types of course also are possible and indeed in some situations may be desirable.

Overall the apparatus and method of the invention provide for increased levels of safety in a tractor-trailer combination having an automated braking system that is intended to reduce the occurrence of jack-knifing and other forms of stability problem. The combination of the features of the invention with such anti-jack-knife measures gives rise to a highly effective braking arrangement the performance of which is superior to that of a combination braked solely on the basis of the judgements of the operator.

## Claims

1. Apparatus for braking a coupled tractor-trailer combination (11,12) in which the tractor (11) includes a drive train one or more operational parameters of which is adjustable and having an engine and at least one ground-engaging member (14,16) driveably connected thereto via an adjustable ratio transmission; and the trailer (12) includes at least one ground engaging member having at least one trailer brake (32a, 32b), the apparatus including a control circuit for the trailer brake having a control device (34), said control circuit being a pneumatic or hydraulic control circuit, and one or more fault detectors of faults in the apparatus, wherein each of said one or more fault detectors includes a control circuit pressure detector that generates a signal indicative of detection of a fault when the hydraulic or pneumatic brake fluid pressure deviates from a commanded pressure value by more than a predetermined error threshold, said apparatus also including a controller (36) that adjusts one or more parameters of the drive train in response to detection of one or more faults by one or more said fault detectors.

2. Apparatus according to Claim 1 wherein the control device is a control valve (34).

3. Apparatus according to Claim 1 wherein the tractor (11) includes at least one tractor brake (28a, 28b, 28c, 28d); wherein the tractor brake is a hybrid pneumatic-hydraulic brake; wherein the trailer brake is a pneumatic brake; and wherein the control device is a control valve (34).

4. Apparatus according to any preceding claim wherein the controller (36) is operatively connected to the control valve (34).

5. Apparatus according to any preceding claim wherein the controller (36) is operatively connected to transmit one or more transmission ratio shift commands to the transmission, and wherein the parameter of the drive train that is adjusted is the transmission ratio.

6. Apparatus according to Claim 5 wherein the controller (36) induces a delay in adjustment of the transmission ratio.

7. Apparatus according to any preceding claim wherein the engine includes a throttle or a governor; wherein the controller (36) is operatively connected to transmit one or more throttle or governor control commands to the throttle or governor; and wherein the parameter of the drive train that is adjusted is the throttle or governor setting.

8. Apparatus according to Claim 5 to Claim 7 wherein the controller (36) adjusts the transmission ratio and/or the throttle or governor so as to maintain the deceleration of the tractor-trailer combination below a chosen threshold value on detection of a fault by one or more said fault detectors.

9. Apparatus according to any preceding claim wherein the one or more fault detectors include detectors of one or more engine and/or transmission faults, one or more detectors of the application of one or more automatically applicable brakes of the tractor and/or the trailer, one or more detectors of failure of the drive train and one or more detectors of broken wires.

10. Apparatus according to any preceding claim including one or more alert devices operatively connected to the controller (36) so as to generate an audible and/or visible alert to an operator of the tractor on the detection of a fault by one or more said fault detectors.

11. A method of braking a coupled tractor-trailer combination (11,12) in which the tractor (11) includes a drive train one or more operational parameters of which is adjustable and having an engine and at least one ground-engaging member (14,16) driveably connected thereto via an adjustable ratio transmission; and the trailer (12) includes at least one ground engaging member having at least one trailer brake (32a, 32b), the apparatus including a control circuit for the trailer brake having a control device (34), said control circuit being a pneumatic or hydraulic control circuit, and one or more fault detectors of faults in the apparatus, wherein each of said one or more fault detectors includes a control circuit pressure detector that generates a signal indicative of detection of a fault when the hydraulic or pneumatic brake fluid pressure deviates from a commanded pressure value by more than a predetermined error threshold, said apparatus also including a controller (36) and the method including the step of using the controller (36) to adjust a parameter of the drive train in response to detection of a fault by one or more said fault detectors.

12. A method according to Claim 11 wherein the step of using the controller (36) to adjust a parameter of the drive train in response to detection of a fault by one or more said fault detectors includes adjusting the ratio of the transmission and/or a setting of the throttle or governor so as to maintain the deceleration of the tractor-trailer combination below a chosen threshold value.

13. A method according to Claim 12 wherein the controller (36) induces a delay in the adjustment of the ratio of transmission.

14. A method according to any of Claims 11 to 13 wherein the one or more fault detectors include detectors of one or more engine and/or transmission faults, one or more detectors of the application of one or more automatically applicable brakes of the tractor and/or the trailer, one or more detectors of failure of the drive train and one or more detectors of broken wires, and detection of a fault by one or more said fault detectors includes the generation of a fault signal by any one or more of the engine and/or transmission fault detectors, the or a said detector of the application of one or more automatically applicable brakes of the tractor and/or the trailer, one or more said detectors of failure of the drive train and one or more said detectors of broken wires.

15. A method according to any of Claims 11 to 14 wherein the tractor-trailer combination includes one or more alert devices operatively connected to the controller and wherein the method includes the step of generating an alert that is audible by and/or visible to an operator of the tractor on the detection of a fault by one or more said fault detectors

16. A tractor-trailer combination including apparatus according to any of Claims 1 to 10.

17. A tractor-trailer combination including one or more programmable devices programmed to perform the steps of a method according to any of Claims 11 to 15.

## Patentansprüche

1. Vorrichtung zum Abbremsen einer gekoppelten Traktor-Anhänger-Kombination (11, 12), bei der der Traktor (11) einen Antriebsstrang umfasst, von dem ein oder mehrere Betriebsparameter einstellbar sind, und einen Motor und zumindest ein den Boden kontaktierendes Element (14, 16) umfasst, das mittels eines Getriebes mit verstellbarer Übersetzung mit dem Motor antreibbar verbunden ist; und bei der der Anhänger (12) zumindest ein den Boden kontaktierendes Element umfasst, das zumindest eine Anhängerbremse (32a, 32b) aufweist, wobei die Vorrichtung einen Regelkreis für die Anhängerbremse mit einer Steuervorrichtung (34), wobei der Regelkreis ein pneumatischer oder hydraulischer Regelkreis ist, und einen oder mehrere Fehlerdetektoren für Fehler der Vorrichtung umfasst, wobei jeder der einen oder mehreren Fehlerdetektoren einen Regelkreis-Druckfühler umfasst, der ein Signal erzeugt, das für das Erkennen eines Fehlers kennzeichnend ist, wenn der Druck eines hydraulischen oder pneumatischen Bremsfluids um mehr als einen vorbestimmten Fehlergrenzwert von einem Soll-Druckwert abweicht, wobei die Vorrichtung auch eine Steuereinrichtung (36) umfasst, die einen oder mehrere Parameter des Antriebsstrangs in Reaktion auf das Erkennen eines oder mehrerer Fehler durch einen oder mehrere der Fehlerdetektoren einstellt.

2. Vorrichtung nach Anspruch 1, wobei die Steuervorrichtung ein Steuerventil (34) ist.

3. Vorrichtung nach Anspruch 1, wobei der Traktor (11) zumindest eine Traktorbremse (28a, 28b, 28c, 28d) umfasst; wobei die Traktorbremse eine pneumatischhydraulische Hybridbremse ist; wobei die Anhängerbremse eine pneumatische Bremse ist; und wobei die Steuervorrichtung ein Steuerventil (34) ist.

4. Vorrichtung nach einem der vorangehenden Ansprüche, wobei die Steuereinrichtung (36) wirkend mit dem Steuerventil (34) verbunden ist.

5. Vorrichtung nach einem der vorangehenden Ansprüche, wobei die Steuereinrichtung (36) wirkend mit dem Getriebe verbunden ist, um einen oder mehrere Befehle zum Verstellen des Übersetzungsverhältnisses zu übertragen, und wobei der Parameter des Antriebsstrangs, der eingestellt wird, das Übersetzungsverhältnis ist.

6. Vorrichtung nach Anspruch 5, wobei die Steuereinrichtung (36) eine Verzögerung in der Verstellung des Übersetzungsverhältnisses veranlasst.

7. Vorrichtung nach einem der vorangehenden Ansprüche, wobei der Motor eine Drosselklappe oder einen Drehzahlregler umfasst, wobei die Steuereinrichtung (36) wirkend verbunden ist, um einen oder mehrere Befehle zum Steuern der Drosselklappe oder des Drehzahlreglers zur Drosselklappe oder zum Drehzahlregler zu übertragen; und wobei der Parameter des Antriebsstrangs, der eingestellt wird, die Drosselklappen- oder Drehzahlreglereinstellung ist.

8. Vorrichtung nach den Ansprüchen 5 bis 7, wobei die Steuereinrichtung (36) das Übersetzungsverhältnis und/oder die Drosselklappe oder den Drehzahlregler derart verstellt, dass die Verzögerung der Traktor-Anhänger-Kombination bei Erkennen eines Fehlers durch den einen oder die mehreren Fehlerdetektoren unter einem gewählten Grenzwert gehalten wird.

9. Vorrichtung nach einem der vorangehenden Ansprüche, wobei der eine oder die mehreren Fehlerdetektoren Detektoren für einen oder mehrere Motor- und/oder Getriebefehler, einen oder mehrere Detektoren für den Einsatz einer oder mehrerer automatisch wirkender Bremsen des Traktors und/oder des Anhängers, einen oder mehrere Detektoren für Fehler des Antriebsstrangs und einen oder mehrere Detektoren für gebrochene Kabel umfassen.

10. Vorrichtung nach einem der vorangehenden Ansprüche, umfassend ein oder mehrere Warngeräte, die wirkend mit der Steuereinrichtung (36) verbunden sind, um bei Erkennen eines Fehlers durch den einen oder die mehreren Fehlerdetektoren eine akustische und/oder sichtbare Warnung für einen Bediener des Traktors zu erzeugen.

11. Verfahren zum Bremsen einer gekoppelten Tranktor-Anhänger-Kombination (11, 12), bei der der Traktor (11) einen Antriebsstrang umfasst, von dem ein oder mehrere Betriebsparameter einstellbar sind, und einen Motor und zumindest ein den Boden kontaktierendes Element (14, 16) umfasst, das mittels eines Getriebes mit verstellbarer Übersetzung mit dem Motor antreibbar verbunden ist; und der Anhänger (12) zumindest ein den Boden kontaktierendes Element umfasst, das zumindest eine Anhängerbremse (32a, 32b) aufweist, wobei die Vorrichtung einen Regelkreis für die Anhängerbremse mit einer Steuervorrichtung (34), wobei der Regelkreis ein pneumatischer oder hydraulischer Regelkreis ist, und einen oder mehrere Fehlerdetektoren für Fehler der Vorrichtung umfasst, wobei jeder des einen oder der mehreren Fehlerdetektoren einen Regelkreis-Druckfühler umfasst, der ein Signal erzeugt, das für das Erkennen eines Fehlers kennzeichnend ist, wenn der Druck eines hydraulischen oder pneumatischen Bremsfluids um mehr als einen vorbestimmten Fehlergrenzwert von einem Soll-Druckwert abweicht, wobei die Vorrichtung auch eine Steuereinrichtung (36) umfasst und das Verfahren den Schritt des Verwendens der Steuereinrichtung (36) zum Einstellen eines Parameters des Antriebsstrangs in Reaktion auf das Erkennen eines Fehlers durch den einen oder die mehreren Fehlerdetektoren umfasst.

12. Verfahren nach Anspruch 11, wobei der Schritt des Verwendens der Steuereinrichtung (36) zum Einstellen eines Parameters des Antriebsstrangs in Reaktion auf das Erkennen eines Fehlers durch den einen oder die mehreren Fehlerdetektoren das Einstellen der Übersetzung des Getriebes und/oder einer Einstellung der Drosselklappe oder des Drehzahlreglers umfasst, um die Verzögerung der Traktor-Anhänger-Kombination unter einem gewählten Grenzwert zu halten.

13. Verfahren nach Anspruch 12, wobei die Steuereinrichtung (36) eine Verzögerung in der Einstellung des Übersetzungsverhältnisses veranlasst.

14. Verfahren nach einem der Ansprüche 11 bis 13, wobei der eine oder die mehreren Fehlerdetektoren Detektoren für einen oder mehrere Motor- und/oder Getriebefehler, einen oder mehrere Detektoren für den Einsatz einer oder mehrerer automatisch wirkender Bremsen des Traktors und/oder des Anhängers, einen oder mehrere Detektoren für Fehler des Antriebsstrangs und einen oder mehrere Detektoren für gebrochene Kabel umfassen, und das Erkennen eines Fehlers durch einen oder mehrere der Fehlerdetektoren das Erzeugen eines Fehlersignals durch einen der einen oder mehreren Motor- und/oder Getriebefehlerdetektoren, den Detektor für den Einsatz der einen oder mehreren automatisch wirkenden Bremsen des Traktors und/oder des Anhängers, den einen oder die mehreren Detektoren für Fehler des Antriebsstrangs und den einen oder die mehreren Detektoren für Kabelbrüche umfasst.

15. Verfahren nach einem der Ansprüche 11 bis 14, wobei die Traktor-Anhänger-Kombination ein oder mehrere Warngeräte umfasst, die wirkend mit der Steuereinrichtung verbunden sind, und wobei das Verfahren den Schritt umfasst, bei Erkennen eines Fehlers durch den einen oder die mehreren Fehlerdetektoren eine Warnung zu erzeugen, die von einem Bediener des Traktors hörbar und/oder für diesen sichtbar ist.

16. Traktor-Anhänger-Kombination umfassend eine Vorrichtung gemäß einem der Ansprüche 1 bis 10.

17. Traktor-Anhänger-Kombination umfassend eine oder mehrere programmierbare Vorrichtungen, die zum Ausführen der Schritte eines Verfahrens gemäß einem der Ansprüche 11 bis 15 programmiert sind.

## Revendications

1. Appareil pour freiner une combinaison tracteur-remorque accouplés (11, 12), dans lequel le tracteur (11) comprend une transmission dont un ou plusieurs paramètres de fonctionnement sont réglables et comportant un moteur et au moins un élément entrant en contact avec le sol (14, 16) relié en entraînement à celui-ci via une transmission à rapport réglable, et la remorque (12) comprend au moins un élément entrant en contact avec le sol comportant au moins un frein de remorque (32a, 32b), l'appareil incluant un circuit de commande pour le frein de remorque comportant un dispositif de commande (34), ledit circuit de commande étant un circuit de commande pneumatique ou hydraulique, et un ou plusieurs détecteurs de défaut dans l'appareil, dans lequel chacun des dits un ou plusieurs détecteurs de défaut inclut un détecteur de pression de circuit de commande qui génère un signal indiquant une détection d'un défaut lorsque la pression de fluide de frein hydraulique ou pneumatique s'écarte d'une valeur de pression commandée de plus d'un seuil d'erreur prédéterminé, ledit appareil incluant également un contrôleur (36) qui règle un ou plusieurs paramètres de la transmission en réponse à la détection d'un ou plusieurs défauts par un ou plusieurs desdits détecteurs de défaut.

2. Appareil selon la revendication 1, dans lequel le dispositif de commande est une soupape de commande (34).

3. Appareil selon la revendication 1, dans lequel le tracteur (11) comprend au moins un frein de tracteur (28a, 28b, 28c, 28d) ; dans lequel le frein de tracteur est un frein hybride pneumatique-hydraulique, le frein de remorque est un frein pneumatique et le dispositif de commande est une soupape de commande (34).

4. Appareil selon l'une quelconque des revendications précédentes, dans lequel le contrôleur (36) est relié fonctionnellement à la soupape de commande (34).

5. Appareil selon l'une quelconque des revendications précédentes, dans lequel le contrôleur (36) est relié fonctionnellement afin de transmettre à la transmission une ou plusieurs commandes de changement de rapport de transmission, et dans lequel le paramètre de la transmission qui est réglé est le rapport de transmission.

6. Appareil selon la revendication 5, dans lequel le contrôleur (36) induit un retard dans le réglage du rapport de transmission.

7. Appareil selon l'une quelconque des revendications précédentes, dans lequel le moteur comprend un papillon des gaz ou un régulateur ; dans lequel le contrôleur (36) est connecté fonctionnellement afin de transmettre au papillon des gaz ou au régulateur une ou plusieurs instructions de commande papillon des gaz ou régulateur, et dans lequel le paramètre de la transmission qui est réglé est le réglage du papillon des gaz ou du régulateur.

8. Appareil selon l'une quelconque des revendications 5 à 7, dans lequel le contrôleur (36) règle le rapport de transmission et/ou le papillon des gaz ou le régulateur de manière à maintenir la décélération de la combinaison tracteur-remorque en dessous d'une valeur de seuil sélectionnée lors de la détection d'un défaut par un ou plusieurs dits détecteurs de défaut.

9. Appareil selon l'une quelconque des revendications précédentes, dans lequel le un ou plusieurs détecteurs de défaut incluent des détecteurs d'un ou de plusieurs défauts de moteur et/ou de transmission, un ou plusieurs détecteurs d'application d'un ou plusieurs freins automatiquement applicables du tracteur et/ou de la remorque, un ou plusieurs détecteurs de défaillance de la transmission et un ou plusieurs détecteurs de fils cassés.

10. Appareil selon l'une quelconque des revendications précédentes, comprenant un ou plusieurs dispositifs d'alerte connectés fonctionnellement au contrôleur (36) de façon à générer une alerte audible et/ou visible à un conducteur du tracteur lors de la détection d'un défaut par un ou plusieurs desdits détecteurs de défaut.

11. Procédé de freinage d'une combinaison tracteur-remorque accouplés (11, 12), dans lequel le tracteur (11) comprend une transmission dont un ou plusieurs paramètres de fonctionnement sont réglables et comportant un moteur et au moins un élément entrant en contact avec le sol (14, 16) relié en entraînement à celui-ci via une transmission à rapport réglable ; et la remorque (12) comprend au moins un élément entrant en contact avec le sol comportant au moins un frein de remorque (32a, 32b), l'appareil comprenant un circuit de commande pour le frein de remorque comportant un dispositif de commande (34), ledit circuit de commande étant un circuit de commande pneumatique ou hydraulique, et un ou plusieurs détecteurs de défaut dans l'appareil, dans lequel chacun des dits un ou plusieurs détecteurs de défaut inclut un détecteur de pression de circuit de commande qui génère un signal indiquant une détection d'un défaut lorsque la pression de fluide de frein hydraulique ou pneumatique s'écarte d'une valeur de pression commandée de plus d'un seuil d'erreur prédéterminé, ledit appareil incluant en outre un contrôleur (36), et ledit procédé comprenant une étape consistant à utiliser le contrôleur (36) pour régler un paramètre de la transmission en réponse à la détection d'un défaut par les un ou plusieurs desdits détecteurs de défaut.

12. Procédé selon la revendication 11, dans lequel l'étape d'utilisation du contrôleur (36) pour régler un paramètre de la transmission en réponse à la détection d'un défaut par un ou plusieurs desdits détecteurs de défaut inclut le réglage du rapport de la transmission et/ou un réglage du papillon des gaz ou du régulateur de façon à maintenir la décélération de la combinaison tracteur-remorque en dessous d'une valeur de seuil sélectionnée.

13. Procédé selon la revendication 12, dans lequel le contrôleur (36) induit un retard dans le réglage du rapport de transmission.

14. Procédé selon l'une quelconque des revendications 11 à 13, dans lequel le un ou plusieurs détecteurs de défaut comprennent des détecteurs d'un ou de plusieurs défauts de moteur et/ou de transmission, un ou plusieurs détecteurs d'application d'un ou plusieurs freins automatiquement applicables du tracteur et/ou de la remorque, un ou plusieurs détecteurs de défaillance de la transmission et un ou plusieurs détecteurs de fils cassés, et la détection d'un défaut par un ou plusieurs desdits détecteurs de défaut inclut la production d'un signal de défaut par l'un quelconque ou plusieurs des détecteurs de défauts de moteur et/ou de transmission, par le ou un dit détecteur d'application d'un ou plusieurs freins automatiquement applicables du tracteur et/ou de la remorque, un ou plusieurs desdits détecteurs de défaillance de la transmission et un ou plusieurs desdits détecteurs de fils cassés.

15. Procédé selon l'une quelconque des revendications 11 à 14, dans lequel la combinaison de tracteur-remorque comprend un ou plusieurs dispositifs d'alerte connectés fonctionnellement au contrôleur et dans lequel le procédé inclut l'étape consistant à produire une alerte qui est audible et/ou visible par un conducteur du tracteur lors de la détection d'un défaut par un ou plusieurs desdits détecteurs de défaut.

16. Combinaison de tracteur-remorque incluant un appareil selon l'une quelconque des revendications 1 à 10.

17. Combinaison de tracteur-remorque comprenant un ou plusieurs dispositifs programmables programmés pour exécuter les étapes d'un procédé selon l'une quelconque des revendications 11 à 15.
